# EUROPEAN PATENT SPECIFICATION

(11) **EP 2 216 646 B1**
(45) Date of publication and mention of the grant of the patent: **10.10.2012**
(21) Application number: 09151516.3
(22) Date of filing: 28.01.2009
(51) Int. Cl.: G01N 23/20

(54) **Method of determining ash content in coal by combined gamma ray transmission and scattering measurements**
Verfahren zur Aschegehaltsbestimmung in Kohle mittels kombinierter Gamma-Strahlen-Transmissions- und Streu-Messungen
Procédé pour déterminer la teneur en cendres de charbon utilisant des mesures combinées à rayons gammas en transmission et en diffusion

(43) Date of publication of application: 11.08.2010
(73) Proprietor: Przedsiebiorstwo Wdrozen Przemyslowych WILPO Sp. z.o.o., 41-400 Myslowice (PL)
(72) Inventor: Górny, Waclaw, 41-400, Myslowice (PL); Grzybczyk, Andrzej, 42-311, Zarki Letnisko (PL); Mainka, Marian, 41-303, Dabrowa Górnicza (PL); Papierkowski, Marcin, 40-866, Katowice (PL); Prygiel, Mr. Roman, 32-600, Oswiecim Brzezinka (PL); Rotko, Mr. Marian, 41-400, Myslowice (PL); Zielinski, Mr. Wieslaw, 43-100, Tychy (PL)
(74) Representative: Malcherek, Piotr

(56) References cited:
- DD-A1- 217 030
- DE-A1- 2 648 434
- GB-A- 2 054 140
- US-A- 4 566 114

## Description

The object of the invention is a method of continuous measurement of ash content in coal transported on belt conveyor with belt comprising steel lines, used especially in mining and power industry for hard and brown coal quality examination during its transport.

There are different measurement methods of ash content in coal transported by belt conveyors, in which mainly radiometer techniques are used. Among them there are methods based on using gamma radiation, including transmission and scattering methods, as well as methods based on natural coal radioactivity measurement and methods using neutron sources.

One of the above mentioned methods is double-energy absorption method which is based on gamma radiation transmission. The core of this method is the effect of absorption diversification of gamma radiation through matter, and as for coal - through its organic and mineral part. Such absorption diversification is mostly seen for so called soft radiation, which is gamma radiation of quantums energy from the range up to about 60 keV. The attenuation of beam radiation increases along with the increase of ash content in coal. This makes the grounds for absorption method of ash content measurement, in other words known as transmission method. Using additionally during measurement second gamma radiation energy of higher energy makes it possible to obtain additional measuring data, which allows to determine the percentage content of ash. This method cannot be used for conveyor belts comprising steel lines because of large attenuation change caused by steel lines which enter the measuring range randomly and thus causing undesirable interference of the measurement.

Another known method is so called scattering method, which is based on back scattering effect of gamma radiation. In this method an outside, low energy gamma radiation source is used, having quantum energy not exceeding 60keV, for example using isotope Am-241. The head containing the source and gamma radiation detector can be located above the conveyor belt with coal, such configuration called "from above" or can be located between the upper and lower conveyor belt, such configuration called "from below". The method is based on the measurement of the amount N of gamma quantum coming into the detector after back scattering of primary gamma radiation in the stream of coal. Unfortunately it is not possible to use this method for measuring on conveyor belts with steel lines since in configuration "from below" the steel lines completely screen the gamma radiation, and in configuration "from above" the grain size of coal and the speed of the conveyor belt in practice do not allow to use this method.

In methods based on natural coal radioactivity measurement the fact that coal contains radioactive elements from uranium U family and thorium Th family or radioactive isotope of K-40 potassium is used. These radioactive elements are mainly contained in mineral part of coal, in particular in ash, and in organic part of coal there are only vestigial amounts of such radioactive elements. The above mentioned radioactive elements emit "alfa", "beta" and "gamma" radiation, which constitute their natural radioactivity. There is a correlation between natural gamma radiation of coal and the ash content in the coal. Such correlation is the base of a method of ash content measurement in coal based on the measurement result of its gamma natural radiation. The result of such measurement is usually impulse counting frequency N from a detector, which is proportional to the ash content in the coal. Low level of measured signal causes that ash meters based on natural radiation measurement are devices which have high measurement inertia and have minimal measurement time of a couple of minutes. Additionally variation of chemical constitution of mineral part interferences the method, which in case of large open pits makes the measurement impossible in practice.

In the last 20 years, mainly in the United States new solutions based on neutron methods have been invented, which use PGNAA technology, based on activating coal by neutrons and carrying spectral analysis of spectrum allowing for percentage defining of nearly all elements of ash. This method gives continuous information about the chemical constitution of ash, in particular also the sulfur content. The drawbacks of this method are high costs of devices used and possibility of appearing high risk for people because of neutron radiation. Further drawbacks are high weight of devices of 5 tons as well as necessity of frequent replacement of Cf-252 sources used in such devices, which are of short life and expensive.

Additionally, many of application embodiments of the above mentioned methods are known from patent literature. For example, Polish patent no. PL 185261 discloses a method in which the layer of raw mineral is gamma radiated, the gamma radiation beam having continuous energy spectrum and quantum having low and medium energy, in the range between 50 to 295 keV, and the detector with spectrometric counting processor carries out counting measurements, over fixed time periods, of radiation quantum in two spectrum energy channels, in particular in a channel of low energy radiation having quantum energy between 50 and 70 keV and in a channel of medium energy radiation, having average quantum energy about four times higher then the quantum energy of low energy radiation, but not exceeding 295 keV. Then, based on the resulting sets of counting numbers pair, defined in standard or non-standard form, logarithms quotient for standard counting numbers for particular number pairs related to low and medium energy is calculated, and then weight average of logarithms quotient and weight average of standard and non-standard counting in medium energy channel is calculated, where weight portions, necessary for calculating weight average, are determined on the basis of sets of counting standard numbers in the channel of medium quantum energy, and in the end calculated weight average are substituted to calibration equation and physical - chemical parameter values in transported layer of raw material are calculated.

Furthermore, United States patent no. US 4359639 discloses method and device for determining parameters of transported raw material. According to this solution hard coal mixture transported by a conveyor belt is radiometrically investigated by two beams of different energy each. The beam of higher energy is a highly collimation beam, and radiation of lower energy is a divergent beam. Both beams investigate the raw material, whereas the detector does not register the divergent radiation, but only the beam photons attenuated due to its transmission through the layer.

Patent DD217030 discloses a method of determining ash content in coal by combining a transmission measurement and a backscatter measurement using a single radiation source.

The invention relates to a method of continuous measurement of ash content in coal transported on belt conveyor with belt comprising steel lines, in which gamma radiation is used. The essence of the invention is that the layer of coal transported by conveyor is investigated by a beam of gamma radiation transmitted from an energy source, which has such an energy that absorption mass factor of the radiation for the coal matter and for the mineral part are significantly diversified. Preferably the source energy is chosen from the range of 30 to 70 keV. At the same time, the amount of impulses, separately for the absorption geometry of radiation in which the detector is located in the axis of the primary radiation beam and separately for the scattering geometry of radiation in which the detector is located in the axis perpendicular to the primary radiation beam, in a time unit is counted, said detectors located opposite the radiation source in relation to the belt. The beam of gamma radiation is directed towards the coals' layer at an acute match angle and at the same time the attenuation of the beam radiation as well as scattered radiation are measured. On the basis of registered amount of impulses, using empirical processing algorithms coded in a counting processor, the content of ash in the stream of coal is determined.

In a preferred embodiment the beam of gamma radiation is directed towards the layer of coal at an angle chosen from the range of 30° to 60°, most preferably at an angle of 45° in relation to the surface of the layer of coal.

It is also preferred that the gamma radiation source emitting the primary beam exposing transported stream of coal is located above the stream of coal and both radiation detectors are located below the conveyor belt.

In order to obtain better measurement accuracy additionally a signal is used from a detector measuring height variation of the exposed layer of coal and from a belt conveyor scales measuring mass variation of the exposed layer of coal.

The invention allows for continuous measurement of ash content in coal transported on belt conveyors equipped with belts comprising steel lines. New measurement method is relatively uncomplicated and cheap in use, as well as it is safe for people being present at the place of measurement. The method can be applied for measurement in the coals' layer having thickness up to about 50 cm. Additionally the proposed method allows for measurement of ash content in coal transported on belt conveyors equipped with normal belt without steel lines. Stable geometry of the measurement system, in particular fixed distance between the coal and detectors, is obtained by placing the radiation source above the belt transporting coals' stream and placing the detectors under the belt, which improves the accuracy of the measurement. Furthermore the measurement beam goes during the measurement through a large surface of the belt which eliminates the effect of belt heterogeneity caused by the presence of steel lines.

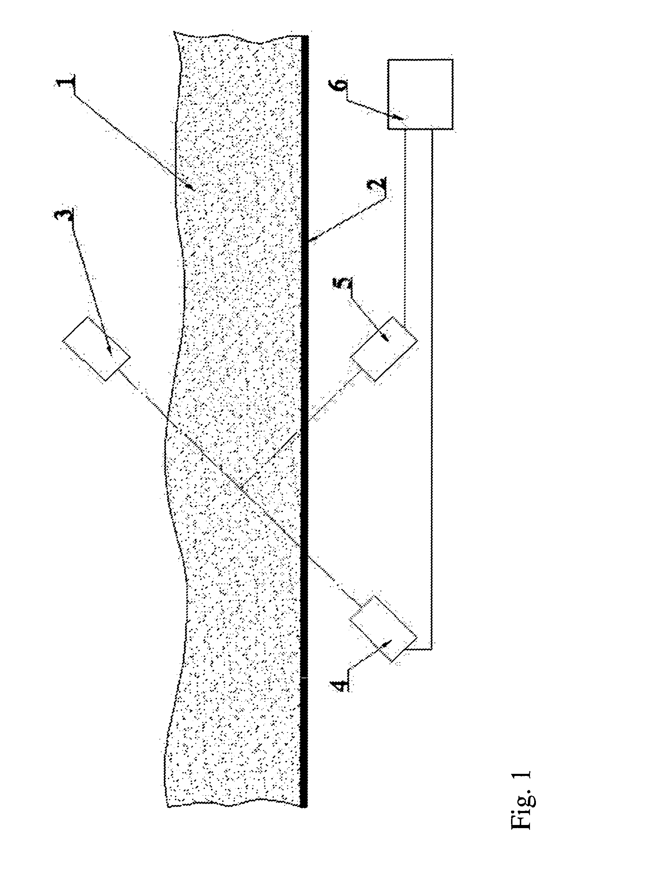

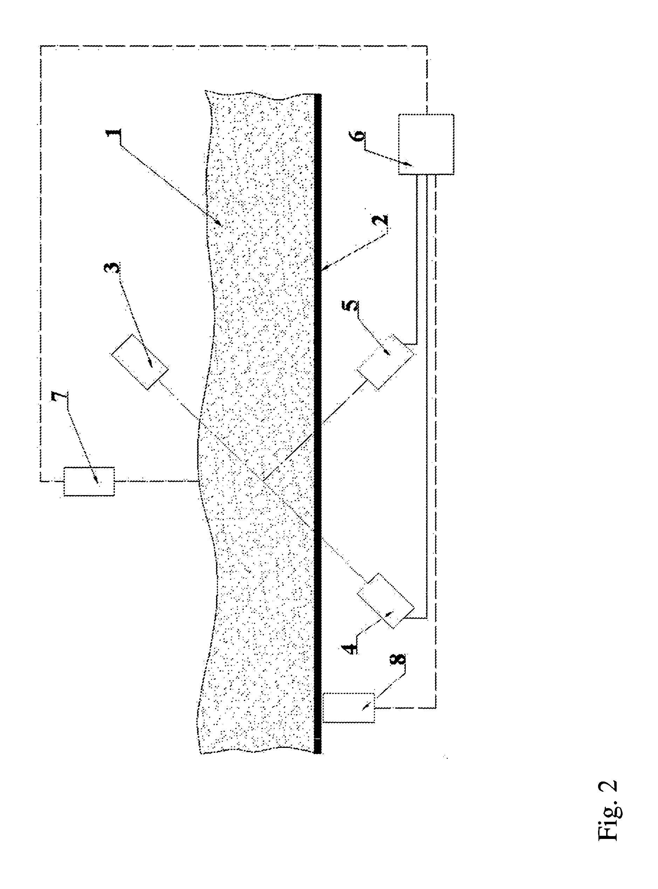

The invention has been presented in details in the following embodiments and in the attached drawing, in which fig. 1 illustrates schematic diagram of the configuration of measurement elements used during the measurement method in a cross-section view along the conveyor belt, and fig. 2 - schematic diagram of different embodiment in alike view.

A beam of gamma radiation from a radiation source 3 having energy about 60 keV and located above a stream of coal 1, is directed, preferably at an angle of 45°, towards the coals' layer 1 transported by a conveyor equipped with a belt comprising steel lines 2, ( fig. 1 ). As a gamma radiation source in this embodiment isotope Am 241 having activity 38 GBq is used, however for carrying out the measurement of ash content in coal it is possible to use sources having different energy chosen from the range of 30 to 70 keV, so absorption mass factors of this radiation for the coal matter and for the mineral part are significantly diversified. At the same time, separately for each of the two measurement geometries: the absorption geometry of radiation in which the detector 4 is located in the axis of the primary radiation beam and the scattering geometry of radiation in which the detector 5 is located in perpendicular position to the axis of the primary radiation beam, the amount of impulses in both detectors 4 and 5 in a time unit is counted. Both detectors are located under the belt transporting the coals' layer 1. Based on the registered amount of impulses, using empirical processing algorithms coded in a counting processor 6, the content of ash in the investigated stream of coal is determined. In the presented embodiment of the invention typical scintillation probes are used as detectors 4 and 5, however different types of detectors available on the market are also effective. The invention covers also embodiments in which the gamma radiation beam is directed towards the coals' layer at any acute angle, preferably chosen from the range of 30° to 60° and matched in such a way that simultaneous and separate measurement of absorption and scattering primary radiation is possible. Small angle deflection, of a couple of degrees, of detectors 4 and 5 of radiation axis and perpendicular direction to this axis does not affect the measurement accuracy of the claimed method.

Fig. 2 shows different embodiment of the invention, which takes into consideration additional signals during the measurement of ash content in analyzed stream of coal. In particular a signal coming from detector 7 is used, said detector measuring height of layer of coal in the measuring point. In measurement practice it is usually ultrasound detector with layers' height continuous measurement function. Using detector 7 allows for improving the accuracy of measurement, in particular for coal of significantly diversified grain sizes and for large fluctuation of layers' height on the conveyor belt. It is also possible to additionally use a signal from belt conveyor scales 8 measuring mass variation of the transported coal 1, which can be used together with the detector 7 measuring height of layer or without it.

## Claims

1. Method of continuous measurement of ash content in coal transported on belt conveyor with belt comprising steel lines, in which the transported stream of coal is exposed to gamma radiation and the amounts of impulses in the beam transmitted through the coal and the conveyor belt are registered, **characterized in that** the beam of gamma radiation transmitted from a radiation source ( 3 ) is directed towards the layer of coal ( 1 ) transported on the conveyor belt, said radiation source having such an energy, preferably chosen from the range from 30 to 70 keV, that absorption mass factors of this radiation for the coal matter and for the mineral part are significantly diversified, and at the same time the amount of impulses in a time unit is counted, separately for the absorption geometry of radiation, in which the detector ( 4 ) is located in the axis of the primary radiation beam and separately for the scattering geometry of radiation, in which the detector ( 5 ) is located in an axis perpendicular to the primary radiation beam, whereas the beam of gamma radiation is directed towards the coals' layer at an acute match angle and at the same time the attenuation of beam radiation as well as scattered radiation are measured, and on the basis of registered amount of impulses, using empirical processing algorithms coded in a counting processor, the content of ash in the stream of coal ( 1 ) is determined, **characterised in that** said detectors ( 4, 5 ) are located opposite the radiation source ( 3 ) in relation to the belt ( 2 ).

2. Method according to claim 1, **characterized in that** the beam of gamma radiation is directed towards the layer of coal ( 1 ) at an angle chosen from the range of 30° to 60°, most preferably at an angle of 45° in relation to the surface of the layer of coal ( 1 ).

3. Method according to claim 1 or 2, **characterized in that** the gamma radiation source emitting the primary beam exposing transported stream of coal ( 1 ) is located above the stream of coal ( 1 ) and both radiation detectors ( 4, 5 ) are located below the conveyor belt.

4. Method according to claim 1 or 2 or 3, **characterized in that** a signal from a detector measuring height variation of the exposed layer of coal ( 1 ) is additionally used for determining the ash content in analyzed stream of coal ( 1 ).

5. Method according to claim 1 or 2 or 3 or 4, **characterized in that** a signal from a belt conveyor scales measuring mass variation of the exposed layer of coal ( 1 ) is additionally used for determining the ash content in analyzed stream of coal ( 1 ).

## Patentansprüche

1. Verfahren zur kontinuierlichen Aschengehaltbestimmung in mittels Bandförderer mit Stahlseilen geförderten Kohle, das auf Durchstrahlung des Kohlestrahls mit Gamma-Strahlen und Registrierung der Impulsanzahl im die Kohle und den Förderband durchstrahlenden Strahlbündel beruht, **dadurch gekennzeichnet, dass** die mit dem Fördererband geförderte Kohleschicht /1/ mit dem drauf gerichteten, durch den Strahlerzeuger /3/ generierten Gammastrahlbündel durchstrahlt wird, wobei die Energie des Strahlerzeugers /3/, vorzugsweise im Intervall von 30 bis 70 keV, so zugewählt ist, dass die auf Masse orientierten Absorptionskennzahlen für Kohlebestanteilen und für Mineralbestandteilen deutlich unterschiedlich sind, und gleichzeitig erfolgt die Summierung der Impulsanzahl pro Zeiteinheit - separat für die Absorptionsstrahlungsgeometrie, in der der Detektor /4/grundsätzlich in Achse des Primärstrahlungsbündels lokalisiert ist, und separat für die Streustrahlungsgeometrie, in der der Detektor /5/ sich grundsätzlich in senkrechter Lage zu dem Primärstrahlungsbündel befindet, wobei das Gammastrahlbündel auf die Kohleschicht unterm spitzen und so zugewählten Winkel gerichtet ist, dass die Messung sowohl der Strahlenschwächung als auch der Streustrahlung möglich ist, und aufgrund der registrierten Impulsanzahl in Anlehnung an die empirischen, im Verarbeitungssystem gespeicherten EDV-Algorithmen der Aschegehalt in untersuchter Kohleschicht /1/bestimmt wird, und **gekennzeichnet dadurch, dass** die gegenständlichen Detektoren /4, 5/ an der anderen Seite des Förderbands /2/ gegenüber dem Strahlerzeuger /3/ lokalisiert sind.

2. Verfahren nach Anspruch 1 **dadurch gekennzeichnet, dass** das Gammastrahlbündel auf die Kohleschicht /1/ vorzugsweise unterm Winkel von 30° bis 60° - am besten unterm Winkel 45° gerichtet ist.

3. Verfahren nach Anspruch 1 oder 2 **dadurch gekennzeichnet, dass** der Gammastrahlerzeuger, der das Primärstrahlungsbündel generiert, mit dem die geförderte Kohleschicht /1/bestrahlt wird, über dem geprüften Kohlestrahl /1/ angeordnet ist und beide Detektoren /4, 5/ unter dem Förderband lokalisiert sind.

4. Verfahren nach Anspruch 1 oder 2 oder 3 **dadurch gekennzeichnet, dass** zur Aschegehaltbestimmung in dem geprüften Kohlestrahl /1/ zusätzlich ein Signal aus einem Meßwertgeber verwendet wird, der die Höheänderungen der bestrahlten Kohleschicht /1/ an der Prüfstelle ermittelt.

5. Verfahren nach Anspruch 1 oder 2 oder 3 oder 4 **dadurch gekennzeichnet, dass** zur Aschegehaltbestimmung in dem geprüften Kohlestrahl /1/ zusätzlich ein Signal aus einer Förderbandwaage verwendet wird, die die Massenänderungen der bestrahlten Kohleschicht /1/ ermittelt.

## Revendications

1. La méthode de la mesure permanente de la teneur en cendres de charbon transporté sur le convoyeur avec des bandes comprenant des fils d'acier, sur lequel le charbon transporté est exposé à un rayonnement gamma où la quantité d'impulsions est enregistrée dans le faisceau passant à travers le charbon et le convoyeur, **caractérisé par** le faisceau de rayonnement gamma émis par une source de rayonnement (3) est dirigé vers la couche de charbon (1) transporté sur la bande transporteuse du convoyeur et, ladite source de rayonnement ayant une telle énergie, de préférence choisie de 30 à 70keV, que les facteurs d'absorption de masse de ce rayonnement pour la matière de charbon et de la partie minérale sont sensiblement diversifiés. En même temps, la quantité d'impulsions dans une unité de temps est comptée, séparément pour la géométrie d'absorption de rayonnement, dans laquelle le détecteur (4) est situé dans l'axe du faisceau de rayonnement primaire et séparément pour la géométrie de diffusion du rayonnement, dans laquelle le détecteur (5) est situé dans l'axe perpendiculaire au faisceau de rayonnement primaire, tandis que le faisceau de rayonnement gamma est dirigé vers la couche de charbon sous un angle aigu où à la fois sont mesurés l'affaiblissement du rayonnement du faisceau ainsi que le rayonnement diffusé et, où la teneur en cendres dans le flux de charbon (1) est déterminée sur la base de la somme d'impulsions enregistrées, à l'aide des algorithmes empiriquement élaborés et codés dans le système de comptage du microprocesseur **caractérisé par** lesdits détecteurs (4,5) situés en face de la source de rayonnement (3) par rapport à la bande (2).

2. La méthode selon la revendication 1, **caractérisée par** le faisceau de rayonnement gamma dirigé vers la couche de charbon (1) à un angle choisi entre 30° à 60°, de préférence à un angle de 45° par rapport à la surface de la couche de charbon (1).

3. La méthode selon les revendications 1 ou 2, **caractérisée par** la source de rayonnement gamma émettant le faisceau primaire irradiant le flux de charbon transporté (1) situé au-dessus du flux de charbon examiné et, les deux détecteurs de rayonnement (4,5) situés au-dessous du convoyeur.

4. La méthode selon les revendications 1 ou 2 ou 3, **caractérisée par** un signal provenant d'un détecteur mesurant la variation de la hauteur de la couche de charbon irradié (1) dans le point de la mesure, utilisé pour déterminer la teneur en cendres du flux de charbon analysé (1).

5. La méthode selon les revendications 1 ou 2 ou 3 ou 4, **caractérisée par** un signal sortant à partir de la balance d'un convoyeur mesurant la variation de la masse de la couche de charbon irradié (1) est, en outre, utilisée pour déterminer la teneur en cendres du flux de charbon analysé (1).
